(19) Europäisches Patentamt

European Patent Office

Office européen des brevets

(11) **EP 4 201 985 A1**

(12) **EUROPEAN PATENT APPLICATION**

(43) Date of publication:
**28.06.2023 Bulletin 2023/26**

(21) Application number: **21216591.4**

(22) Date of filing: **21.12.2021**

(51) International Patent Classification (IPC):
**C08J 9/00** (2006.01)    **C08J 9/32** (2006.01)
**H01B 3/30** (2006.01)

(52) Cooperative Patent Classification (CPC):
**C08J 9/32; C08J 9/0033; H01B 3/441;**
C08J 2201/026; C08J 2203/22; C08J 2300/108;
C08J 2323/08

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG**
**1020 Vienna (AT)**

(72) Inventors:
• **Gschneidtner, Tina**
**444 86 Stenungsund (SE)**

• **Sultan, Bernt-Åke**
**531 30 Lidköping (SE)**
• **Prieto, Oscar**
**444 86 Stenungsund (SE)**
• **Anker, Martin**
**444 86 Stenungsund (SE)**

(74) Representative: **Maiwald GmbH**
**Elisenhof**
**Elisenstraße 3**
**80335 München (DE)**

(54) **POLYMER COMPOSITION SUITABLE FOR CABLE INSULATION**

(57)    The present invention relates to a polymer composition comprising a crosslinkable polyolefin comprising hydrolysable silane groups, a silanol condensation catalyst and expendable polymeric microspheres, an article comprising said polymer composition and the use of said polymer composition for the production of an article.

**EP 4 201 985 A1**

**Description**

The present invention relates to a polymer composition comprising a crosslinkable polyolefin comprising hydrolysable silane groups, a silanol condensation catalyst and expendable polymeric microspheres, an article comprising said polymer composition and the use of said polymer composition for the production of an article.

**Technical background**

It is known to cross-link polyolefins such as polyethylene by means of additives as this improves several of the properties of the polyethylene, such as mechanical strength and chemical heat resistance. Crosslinking may be performed by condensation of silanol groups contained in the polyolefin which can be obtained by hydrolysation of silane groups. A silane compound may be introduced as a crosslinkable group into a polyolefin e.g. by grafting the silane compound onto the polyolefin, or by copolymerization of olefin monomers and silane group containing monomers. Such techniques are known e.g. from US 4,413,066, US 4.297,310, US 4,351,876, US 4,397,981, US 4,446,283 and US 4,456,704.

In the present invention, the crosslinkable polymer composition is particularly used for the production of a wire or cable, in particular a low voltage cable. Electric power cables for low voltages, i.e. voltages of below 6 kV, usually comprised of an electric conductor which is coated with an insulation layer. Such low voltage cables are also denoted as single wire cables. Optionally, two or more of such single wire cables are surrounded by a common outermost sheath layer, the jacket. A typical medium voltage power cable, usually used for voltages from 6 to 36 kV, and a typical high voltage cable used for voltages higher than 36 kV, comprised of one or more conductors in a cable core that is surrounded by one or several layers of polymeric materials that can include, an inner semiconducting layer, followed by an insulating layer, and an outer semiconducting layer. These layers are normally crosslinked. To these layers, further layers may be added, such as a metallic tape or wire shield, and, finally, an outermost jacketing layer. The layers of the cable are based on different types of polymer compositions. As insulating materials, today crosslinked polyethylenes like crosslinked low density polyethylene are predominantly used.

For hydrolysing silane groups of polyolefins, a silanol condensation catalyst is usually used. Conventional catalysts are for example tin-organic compounds such as dibutyl tin dilaurate (DBTDL). It is further known that the crosslinking process advantageously is carried out in the presence of acidic silanol condensation catalysts. In contrast to the conventional tin-organic catalysts the acidic catalysts allow crosslinking to quickly take place already at room temperature and with no risk to release tin organic compounds to the environment. Such acidic silanol condensation catalysts are disclosed for example in WO 95/17463. The content of this document is enclosed herein by reference.

For increasing the flexibility of power cables it is known in the art to foam the different layers of the power cable. An increased flexibility facilitates installation of the power cables. For foaming the cable layers foaming agents are introduced into the polymer compositions of the accordant cable layer. Suitable foaming agents for foaming polymer compositions are chemical blowing agents, physical blowing agents or expandable polymeric microspheres. WO 2017/102609 discloses foamable polymer compositions for jacketing layers comprising chemical blowing agents.

WO 2020/178381 disclose foamable polymer compositions for jacketing layers comprising chemical blowing agents or expandable polymeric microspheres.

Chemical foaming agents based on e.g. azodicarbonamide, citric acid, monosodium citrate and dolomite, monosodium citrate and talc or sodium carbonate interfere with the catalytic activity of silanol condensation catalysts, especially acidic silanol condensation catalysts so that the crosslinking of polymer compositions by hydrolysing silane groups in the presence of such foaming agents is severely impaired. As a consequence such foamable compositions lack mechanical strength due to insufficient crosslinking.

Thus, there is a need in the art for polymer compositions which are suitable for cable layers, especially insulation layers of low voltage cables, which show an improved flexibility together with a maintained mechanical strength and electric resistivity. It has been found that expandable polymeric microspheres do not interfere with the catalytic activity of silanol condensation catalysts so that by using expandable polymeric microspheres as foaming agent in a polymer composition comprising a crosslinkable polyolefin comprising hydrolysable silane groups and a silanol condensation catalyst an expanded cable layer can be obtained which is sufficiently crosslinked to meet all the above discussed requirements.

**Summary of the invention**

The present invention relates to a polymer composition comprising

(A) a cross-linkable polyolefin comprising hydrolysable silane groups;
(B) a silanol condensation catalyst; and
(C) expandable polymeric microspheres.

Further, the present invention relates to an article comprising the polymer composition as described above or below.

Still further, the present invention relates to the use of the polymer composition as described above or below for the production of an article.

**Brief description of the figures**

Figure 1 shows the flexural modulus and the tensile modulus of tapes of crosslinked examples CE1 and IE5 to IE7 over the amount of expanded microspheres.

Figure 2 shows the tensile strength at break of crosslinked cable samples of examples CE1 and IE1 to IE4 over the amount of expanded microspheres.

Figure 3 shows microscopic photographs of 100 $\mu$m thick slices through cables of examples IE1 to IE4.

**Definitions**

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Expandable polymeric microspheres are microscopic spheres comprising a thermoplastic shell encapsulating a liquid hydrocarbon having a low boiling point. When heated to a temperature high enough to soften the thermoplastic shell the hydrocarbon vaporizes and the increasing pressure from the vaporized hydrocarbon will cause the microsphere to expand. The volume of the expanded microspheres can increase by 60 to 80 times.

Throughout the present application, the particle size of a fraction of a particulate material is described by its particle size distribution. The value d, represents the diameter relative to which x % by weight of the particles have diameters less than $d_x$. The $d_{50}$ value is thus the "median particle size" at which 50 wt.-% of all particles are smaller than the indicated particle size.

**Detailed description of the invention**

Composition

The present invention relates to a polymer composition comprising

(A) a cross-linkable polyolefin comprising hydrolysable silane groups;
(B) a silanol condensation catalyst; and
(C) expandable polymeric microspheres.

Preferably, cross-linkable polyolefin containing hydrolysable silane groups (A) makes up at least 30.0 wt%, more preferably at least 50.0 wt%, and even more preferably at least 80.0 wt% or at least 88.0 wt% of the total polymer composition.

It is preferred that the cross-linkable polyolefin containing hydrolysable silane groups (A) is used in the composition of the invention, in an amount of 80.0 to 99.5 wt%, more preferably of 85.0 to 99.0 wt.%, and even more preferably of 88.0 of 98.0 wt% of the total polymer composition.

Preferably the cross-linkable polyolefin (A) comprises, more preferably consists of, a polyethylene containing hydrolysable silane groups.

The hydrolysable silane groups may be introduced into the polyolefin by copolymerization of for example ethylene monomers with silane group containing comonomers or by grafting, i.e. by chemical modification of the polymer by addition of silane groups mostly in a radical reaction. Both techniques are well known in the art.

Preferably the silane group containing polyolefin has been obtained by copolymerization or by grafting, more preferably by copolymerization.

In the case of polyolefins, preferably polyethylene, the copolymerization is preferably carried out with an unsaturated silane compound represented by the formula (I)

$$R^1SiR^2_qY_{3-q} \qquad (I)$$

wherein

$R^1$ is an ethylenically unsaturated hydrocarbyl, hydrocarbyloxy or (meth)acryloxy hydrocarbyl group,
$R^2$ is an aliphatic saturated hydrocarbyl group,
Y which may be the same or different, is a hydrolysable organic group and
q is 0, 1 or 2.

Examples of the unsaturated silane compound are those wherein

$R^1$ is vinyl, allyl, isopropenyl, butenyl, cyclohexanyl or gamma-(meth)acryloxy propyl;
Y is methoxy, ethoxy, formyloxy, acetoxy, propionyloxy or an alkyl- or arylamino group; and
$R^2$, if present, is a methyl, ethyl, propyl, decyl or phenyl group.

A preferred unsaturated silane compound is represented by the formula (II)

$$CH_2=CHSi(OA)_a \qquad (II)$$

wherein
A is a hydrocarbyl group having 1-8 carbon atoms, preferably 1-4 carbon atoms.
More preferred compounds are vinyl trimethoxysilane, vinyl bismethoxyethoxysilane, vinyl triethoxysilane, gamma-(meth)acryl-oxypropyl-trimethoxysilane, gamma(meth)acryloxypropyl triethoxysilane, and vinyl triacetoxysilane, or combinations of two or more thereof.
The copolymerization of the olefin, for example ethylene, and the unsaturated silane compound may be carried out under any suitable conditions resulting in the copolymerization of the two monomers.
The cross-linkable polyolefin with hydrolysable silane groups (A) is preferably a low density polyethylene with hydrolysable silane groups comonomers. Thereby, ethylene monomers and the hydrolysable silane groups comonomers are preferably copolymerized in a high pressure process as known in the art.
Preferably in the cross-linkable polyolefin with hydrolysable silane groups (A) the silane groups are present in an amount of 0.001 wt% or more, more preferably 0.01 wt% or more, even more preferably 0.1 wt% or more of component (A), and most preferably 0.4 wt% or more of component (A).
Preferably in the cross-linkable polyolefin with hydrolysable silane groups (A) the silane groups are present in an amount of 15.0 wt% or less, more preferably 5.0 wt% or less, even more preferably 2.5 wt% or less, and most preferably 1.5 wt% or less of component (A).
Preferably in the cross-linkable polyolefin with hydrolysable silane groups (A) the silane groups are present in an amount of 0.001 to 15.0 wt%, more preferably 0.01 to 5.0 wt%, even more preferably 0.1 to 2.5 wt% and most preferably 0.4 to 1.5 wt% of component (A).
Preferably the polymer composition has an $MFR_2$ (190°C, 2.16 kg) of 0.1 to 200 g/10 min, more preferably of 0.3 to 50 g/10 min and most preferably of 0.5 to 10 g/10 min, and/or a density of 850 to 960 kg/m$^3$, more preferably of 860 to 945 kg/m$^3$ and most preferably of 880 of 935 kg/m$^3$.
It is furthermore preferred that the polymer composition comprises a polyolefin with monomer units with polar groups.
Preferably the polar groups are selected from siloxane, amide, anhydride, carboxylic, carbonyl, hydroxyl, ester and epoxy groups.
The polar groups may for example be introduced into the polymer by grafting of an ethylene polymer with a polar-group containing compound, i.e. by chemical modification of the polyolefin by addition of a polar group containing compound mostly in a radical reaction. Grafting is for example described in US 3,646,155 and US 4,117,195.
It is further preferred that said polar groups are introduced into the polymer by copolymerization of olefinic, including ethylene, monomers with comonomers bearing polar groups.
As examples of comonomers having polar groups may be mentioned the following:

(a) vinyl carboxylate esters, such as vinyl acetate and vinyl pivalate,
(b) (meth)acrylates, such as methyl(meth)acrylate, ethyl(meth)acrylate, butyl(meth)acrylate and hydroxyethyl(meth)acrylate,
(c) olefinically unsaturated carboxylic acids, such as (meth)acrylic acid, maleic acid and fumaric acid,
(d) (meth)acrylic acid derivatives, such as (meth)acrylonitrile and (meth)acrylic amide, and

(e) vinyl ethers, such as vinyl methyl ether and vinyl phenyl ether.

Amongst these comonomers, vinyl esters of monocarboxylic acids having 1 to 4 carbon atoms, such as vinyl acetate, and (meth)acrylates of alcohols having 1 to 4 carbon atoms, such as methyl (meth)acrylate, are preferred.

Especially preferred comonomers are butyl acrylate, ethyl acrylate and methyl acrylate. Two or more such olefinically unsaturated compounds may be used in combination. The term "(meth)acrylic acid" is intended to embrace both acrylic acid and methacrylic acid. Preferably, the polar group containing monomer units are selected from the group of acrylates and/or acetates.

The amount of polar group containing monomer units in the polyolefin preferably is 40 wt% or less, more preferably 35 wt% or less, and still more preferably is 25 wt% or less. Preferably in the polyolefin with polar groups the monomer units with polar groups are present in an amount of 0.1 to 40 wt%, preferably 1.0 to 35 wt%, more preferably 2.0 to 25 wt% and even more preferably 3.0 to 20 wt%.

Furthermore, preferably the polar group containing monomer units are present in the polyolefin with polar groups in an amount of from 2.5 to 15 mol%, more preferably 3.0 to 10 mol%, and most preferably 3.5 to 6.0 mol%.

In another preferred embodiment, the cross-linkable polyolefin with hydrolysable silane groups (A) at the same time also contains polar groups in any of the embodiments as described hereinbefore.

Preferably in said embodiment the cross-linkable polyolefin with hydrolysable silane groups (A) is a terpolymer also containing monomer units with polar groups, i.e. the cross-linkable polyolefin with hydrolysable silane groups (A) contains both, silane groups and polar groups. Furthermore, also the preferred amounts for the silane group and the polar group containing monomers as described above apply for the terpolymer.

It is preferred that the terpolymer is a terpolymer of ethylene monomer units, hydrolysable silane groups (A) and polar groups.

Such terpolymers may be produced by grafting or by copolymerization of olefin monomers and unsaturated monomers containing silane groups and polar groups.

According to a preferred embodiment the terpolymer is produced by copolymerization of olefin monomers and unsaturated monomers containing silane groups and polar groups.

The terpolymer is preferably a low density polyethylene with hydrolysable silane groups comonomers and polar comonomers. Thereby, ethylene monomers, the hydrolysable silane groups comonomers and the polar comonomers are preferably copolymerized in a high pressure process as known in the art.

According to another preferred embodiment the terpolymer is produced by grafting silane compounds and/or polar groups containing compounds onto the polyolefin.

Preferably the monomer units with polar groups comprise monomer units with acrylate and/or acetate units.

If such a terpolymer containing both the silane groups and the polar groups is used in the composition of the invention, it is preferred that it makes up at least 30.0 wt%, more preferably at least 50.0 wt%, and even more preferably at least 80.0 wt% or at least 88.0 wt% of the total polymer composition.

Further preferred the terpolymer containing both the silane groups and the polar groups is used in the composition of the invention, in an amount of 80.0 to 99.3 wt%, more preferably of 85.0 to 99.0 wt%, and even more preferably of 88.0 of 98.0 wt% of the total polymer composition.

For cross-linking of such polyolefins, a silanol condensation catalyst (B) must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463. The content of this document is enclosed herein by reference.

Examples for acidic silanol condensation catalysts comprise Lewis acids, inorganic acids such as sulfuric acid and hydrochloric acid, and organic acids such as citric acid, stearic acid, acetic acid, sulfonic acid and alkanoic acids such as dodecanoic acid.

Preferred examples for an acidic silanol condensation catalyst are sulfonic acid and tin organic compounds.

It is preferred that the acidic silanol condensation catalyst comprises a sulfonic acid, preferably comprises an organic sulfonic acid.

It is further preferred that the acidic silanol condensation catalyst comprises a sulfonic acid compound according to formula (III):

$$Ar(SO_3H)_X \qquad (III)$$

or a precursor thereof,
Ar being an aryl group with one or several aromatic rings, preferably 1 to 3 aromatic rings, more preferably 1 to 2 aromatic rings, which may be substituted or non-substituted, and x being at least 1.

The acidic silanol condensation catalyst may comprise the structural unit according to formula (III) one or several times, for example two or three times. For example, two structural units according to formula (III) may be linked to each other via a bridging group such as an alkylene group.

Preferably, the Ar group is an aryl group, which is substituted with at least one $C_1$ to $C_{30}$-hydrocarbyl group, more preferably $C_4$ to $C_{30}$-alkyl group.

Furthermore, preferably the compound used as organic aromatic sulfonic acid silanol condensation catalyst has from 10 to 200 carbon atoms, more preferably from 14 to 100 carbon atoms.

According to a preferred embodiment acidic silanol condensation catalyst comprises an organic sulfonic acid comprising 10 to 200 carbon atoms, preferably 14 to 100 carbon atoms, and the sulfonic acid further comprises at least one aromatic group.

It is further preferred that the hydrocarbyl group is an alkyl substituent having 10 to 18 carbon atoms and even more preferred that the alkyl substituent contains 12 carbon atoms and is selected from dodecyl and tetrapropyl. It is most preferred that the aryl group is a benzene substituted group with an alkyl substituent containing 12 carbon atoms.

The currently most preferred compounds of formula (III) are dodecyl benzene sulfonic acid, tetrapropyl benzene sulfonic acid and naphthalene-based sulfonic acids, such as $C_{12}$-alkylated naphthyl sulfonic acids.

The acidic silanol condensation catalyst may also be a precursor of a compound of formula (III), i.e. a compound that is converted by hydrolysis to a compound of formula (III). Such a precursor is for example the acid anhydride of the sulfonic acid compound of formula (III). Another example is a sulfonic acid of formula (III) that has been provided with a hydrolysable protective group as for example an acetyl group, which can be removed by hydrolysis to give the sulfonic acid of formula (III).

The silanol condensation catalyst (B) is preferably used in an amount from 0.0001 to 3.00 wt%, based on the total weight of the polymer composition.

The preferred amount of silanol condensation catalyst (B) is from 0.001 to 2.00 wt% and more preferably 0.005 to 1.00 wt% based on the total weight of the polymer composition.

The effective amount of catalyst depends on the molecular weight of the catalyst used. Thus, a smaller amount is required of a catalyst having a low molecular weight than a catalyst having a high molecular weight.

The silanol condensation catalyst (B) can be added to the polymer composition in form of a masterbatch, comprising the silanol condensation catalyst (B) in higher amounts in a carrier polymer. Suitable carrier polymers are ethylene copolymers such as a copolymer of ethylene with a $C_1$ to $C_6$ acrylate, such as a copolymer of ethylene and butylacrylate. The masterbatch can comprise additional components such as additives as discussed below or a silicon containing compound such as e.g. hexadecyl trimethoxy silane.

When adding the silanol condensation catalyst (B) in form of a masterbatch, the amount of the masterbatch comprising the silanol condensation catalyst (B) in the total polymer composition is preferably in the range of from 0.01 to 10.0 wt%, more preferably 0.05 to 7.5 wt%, still more preferably 0.1 to 6.0 wt%.

The polymer composition according to the invention further comprises expandable polymeric microspheres (C) as blowing agent.

The expandable polymeric microspheres can act as a blowing agent when mixed in a product and heated to cause expansion within the matrix. Similarly also for the expandable polymeric microspheres expansion is easy to control by constant supply of heat for the reaction.

Expandable polymeric microspheres are adapted to expand when exposed to heat as described in US 3,615,972. These microspheres are monocellular particles comprising a body of resinous material encapsulating a volatile fluid. When heated, the resinous material of thermoplastic microspheres softens and the volatile material expands causing the entire microsphere to increase substantially in size. On cooling, the resinous material in the shell of the microspheres ceases flowing and tends to retain its enlarged dimension the volatile fluid inside the microsphere tends to condense, causing a reduced pressure in the microsphere. Another advantage of these expandable polymeric microspheres is that they do not release any gas.

Typically, expandable polymeric microspheres are made of a thermoplastic polymer shell e.g. methyl methacrylate and acrylonitrile, methyl methacrylate, acrylonitrile and vinylidene chloride, o-chlorostyrene, p-tertiarybutyl styrene, vinyl acetate and their copolymers, i.e., styrene-methacrylic acid, styrene-acrylonitrile, styrene-methyl methacrylate The gas inside the shell can be an aliphatic hydrocarbon gas, eg. isobutene, pentane, or iso-octane. These microspheres may be obtained in a variety of sizes and forms, with expansion temperatures generally ranging from 80 to 130°C. Expandable polymeric microspheres are commercially available, for example, from Nouryon under the trademark EXPANCEL™, and from Henkel under the trademark DUALITE™. The term "expandable microsphere" as used in this disclosure is intended to encompass any hollow resilient container filled with volatile fluid which is adapted to expand. The microspheres are typically ball-shaped particles but may have other shapes as well, e.g., tubes, ellipsoids, cubes, particles and the like, all adapted to expand when exposed to an energy source.

Preferably the polymer composition does not comprise of any other blowing agents, such as chemical blowing agents or physical blowing agents. The advantage of using only expandable polymeric microspheres (C) as blowing agent is to even better control the foaming process as only one temperature interval has to be taken into account during processing which reduces the complexity of the process.

The expandable polymeric microspheres (C) are preferably present in the polymer composition in an amount of from 0.01 to 2.0 wt%, more preferably 0.05 to 1.0 wt%, still more preferably 0.1 to 0.7 wt%, based on the total amount of the polymer composition.

The expandable polymeric microspheres are preferably compounded with or melt mixed with the polymer composition. Preferably, the expandable polymeric microspheres (C) are added in form of a masterbatch comprising 30 to 80 wt% of the expandable polymeric microspheres in a carrier polymer. Suitable carrier polymers are ethylene copolymers such as a copolymer of ethylene vinyl acetate. Preferably the masterbatch consists of the expandable polymeric microspheres (C) and the carrier polymer.

The masterbatch comprising the expandable polymeric microspheres (C) is preferably added to, more preferably compounded with or melt mixed with the polymer composition. The distribution of the expandable polymeric microspheres in the polymer composition is improved by preferably melt mixing the masterbatch comprising the expandable polymeric microspheres (C) into the polymer composition by compounding prior to the extrusion of the polymer composition in an extruder.

When added in form of a masterbatch, the amount of the expandable polymeric microspheres (C) present in the polymer composition as described above also includes the components of the masterbatch.

The expandable polymeric microspheres (C) preferably have a median average diameter $d_{50}$ of from 5 to 40 $\mu$m, preferably from 15 to 38 $\mu$m, determined by laser diffraction.

It is preferred that the expandable polymeric microspheres (C) exhibit a start temperature at which the expandable polymeric microspheres begin to transition from unexpanded state to the expanded state in the range of from 100 to 200°C, preferably in the range of from 120 to 185°C. The start temperature can be determined by expansion measurement. Thereby about 0.5 g of the expandable polymeric microspheres is weighed in a 25 ml graduated cylinder. Subsequently, this cylinder is heated in an oven from 25 °C to 220 °C with a heating rate of 5 K/min. During this heating phase, the degree of expansion of the microspheres was followed and recorded using the scale on a graduated cylinder (S. Ries et al., Foam injection molding of thermoplastic elastomers: Blowing agents, foaming process and characterization of structural foams, AIP Conference Proceedings 1593, 401 (2014); doi: 10.1063/1.4873809).

The polymer composition preferably comprises

80.0 to 99.5 wt%, more preferably of 85.0 to 99.0 wt.%, and even more preferably of 88.0 of 98.0 wt% of the cross-linkable polyolefin comprising hydrolysable silane groups (A), 0.0001 to 3.00 wt%, preferably 0.001 to 2.00 wt%, more preferably 0.005 to 1.00 wt% of the silanol condensation catalyst (B), and
0.01 to 2.0 wt%, preferably 0.05 to 1.0 wt%, more preferably 0.1 to 0.7 wt% of the expandable polymeric microspheres (C),
all based on the total weight of the polymer composition.

The polymer composition according to the invention may further contain various additives different from the expandable polymeric microspheres (C), such as miscible thermoplastics, antioxidants, UV stabilizers, further stabilizers for example water tree retardants, scorch retardants, lubricants, fillers and coloring agents.

The total amount of additives different from the expandable polymeric microspheres (C) is generally 0.01 to 10.0 wt%, preferably 0.05 to 7.0 wt%, more preferably 0.1 to 5.0 wt% of the total polymer composition.

As antioxidant, preferably a compound, or a mixture of such compounds, is used which is neutral or acidic, must comprise a sterically hindered phenol group or aliphatic sulfur groups. Such compounds are disclosed in EP 1 254 923 to be particularly suitable antioxidants for stabilization of polyolefins containing hydrolysable silane groups which are cross-linked with a silanol condensation catalyst, in particular an acidic silanol condensation catalyst. Other preferred antioxidants are disclosed in WO 2005/003199A1.

Preferably, the antioxidant is present in the polyolefin composition in an amount of from 0.01 to 3.0 wt%, more preferably 0.05 to 2.0 wt%, and most preferably 0.08 to 1.5 wt% of the total polyolefin composition.

As filler, preferably carbon black in an amount of 3.0 wt% or less, preferably 2.5 wt% or less, most preferably 2.0 wt% or less of the total polyolefin composition can be used.

As coloring agent, all coloring agents apart from carbon black suitable for cable or pipe applications can used.

It is preferred that the polyolefin composition does not comprise additional fillers or coloring agents.

An expanded polymer composition can be obtained by expanding the polymer composition according to the invention.

Expanding is done by heating the polymer composition to a temperature above the start temperature at which the expandable polymeric microspheres (C) begin to transition from unexpanded state to the expanded state, such as a temperature of preferably 150 °C to 240 °C, more preferably 180 °C to 235 °C, even more preferably to 210 °C to 230 °C. In this temperature ranges the resinous material of thermoplastic microspheres softens and the volatile material expands as described above, thereby leading to an expanded polymer composition.

The foaming process includes mixing and homogenization of the components in the first part of an extruder followed by optimization of expansion properties (e.g. expansion degree and cell structure, size and distribution in a layer of a cable) in the end of the extruder, die and outlet from the extruder head. Furthermore, the process step for manufacturing the foamed composition and the cable layer, may comprise any ordinary extruder, e.g. a single screw extruder.

In the first part of the extruder the components (A), (B) and (C) are preferably compounded at a temperature below a start temperature at which the expandable polymeric microspheres (C) begin to transition from unexpanded state to the expanded state in order to ensure mixing and homogenization before beginning to expand the polymer composition.

The foaming degree might be controlled by changing extrusion parameters such as, for example, adjusting the temperature settings on the extruder and/or extruder head, line speed, screw speed, extruder die position, cooling bath position and cooling water temperature.

The expanded polymer composition preferably has an expansion degree of 0.1 to 30%, more preferably 0.3 to 28%, more preferably 0.5 to 26%, most preferred 1.0 to 25%.

The "degree of expansion" (G), is defined as:

$$G = (d_0/d_e - 1) \times 100$$

where $d_0$ indicates the density of the unexpanded polymer and $d_e$ represents the measured apparent density, or weight per unit volume in $g/cm^3$, of the expanded polymer.

Preferably the expanded polymer composition is additionally crosslinked. Preferably cross-linking is performed by moisture curing, wherein in the presence of the silanol condensation catalyst (B), preferably the acidic silanol condensation catalyst, the silane groups of the cross-linkable polyolefin (A) are hydrolysed under the influence of water or steam, resulting in the splitting off of alcohol and the formation of silanol groups, which are then cross-linked in a condensation reaction wherein water is split off.

Moisture curing may be performed in a sauna or water bath at temperatures of 70 to 100°C. In a preferred embodiment of the present invention the curing is performed at a temperature of 5 to 50°C, more preferably of 10 to 40°C and a humidity below 85 %, more preferably below 75 %.

Usually, the expanded polymer composition is cross-linked after being formed into an article, e.g. after producing of a cable layer comprising the expanded polymer composition onto a conducting core.

The expanded and crosslinked polymer composition preferably has a gel content of from 15 to 85%.

The expanded and crosslinked polymer composition shows an improved balance of properties in form of increased flexibility at maintained mechanical properties and electrical resistivity.

The expanded and crosslinked polymer composition preferably has a flexural modulus of not more than 240 MPa, more preferably from 125 to 230 MPa, still more preferably from 150 to 220 MPa.

The expanded and crosslinked polymer composition preferably has a tensile modulus of not more than 180 MPa, more preferably from 100 to 175 MPa, still more preferably from 105 to 170 MPa.

Further, the expanded and crosslinked polymer composition preferably has a tensile strength of from 10.0 to 30.0 MPa, more preferably from 10.5 to 27.5 MPa, still more preferably from 11.0 to 25.0 MPa.

Still further, the expanded and crosslinked polymer composition preferably has an elongation at break of from 400% to 550%, more preferably from 420% to 525%, still more preferably from 435% to 500%.

Additionally, the expanded and crosslinked polymer composition preferably has a volume resistivity, when measured on cables at 23°C, of from 0.1 to 10.0 x $10^{17}$ Ohmscm, more preferably from 0.2 to 8.0 x $10^{17}$ Ohmscm, still more preferably from 0.3 to 7.0 x $10^{17}$ Ohmscm.


**Article**

According to a further aspect the present invention relates to an article comprising the polymer composition in any of the above described embodiments.

In a preferred embodiment the article refers to a wire or cable, more preferably a low voltage (LV) cable.

Preferably the wire or cable comprises at least one layer comprising the polymer composition according to the invention, such as an insulation layer comprising the polymer composition according to the invention.

Preferably, the insulating layer of the low voltage cable or wire has a thickness of 0.1 to 5 mm, more preferably at more preferably of 0.25 to 4 mm, even more preferably of 0.4 to 3 mm and most preferably of 0.5 to 2.3 mm.

Usually, the cable is produced by co-extrusion of the different layers onto the conducting core. During extrusion the polymeric microspheres (C) are expanded. Then, cross-linking is performed by moisture curing, wherein in the presence of the acidic silanol condensation catalyst the silane groups are hydrolyzed under the influence of water or steam, resulting in the splitting off of alcohol and the formation of silanol groups, which are then cross-linked in a condensation reaction wherein water is split off.

Moisture curing may be performed in a sauna or water bath at temperatures of 70 to 100°C. In a preferred embodiment of the present invention the curing is performed at a temperature of 5 to 50°C, more preferably of 10 to 40°C and a humidity below 85 %, more preferably below 75 %.

It is especially preferred that in the article the polymer composition is crosslinked, preferably by crosslinking the hydrolysable silane groups of component (A) in the presence of the silanol condensation catalyst (B) as described above.

It is further especially preferred that in the article the polymeric microspheres (C) are expanded as described above.

It is preferred that the article has an expansion degree of from 0.1 to 20.0%, preferably 0.5 to 15.0%, still more preferably from 1.0 to 10.0%.

The article preferably has one or more preferably all of the following properties:

- a flexural modulus of not more than 240 MPa, preferably from 125 to 230 MPa, still more preferably from 150 to 220 MPa,
- a tensile modulus of not more than 180 MPa, preferably from 100 to 175 MPa, still more preferably from 105 to 170 MPa,
- an elongation at break of from 400% to 550%, preferably from 420% to 525%, still more preferably from 435% to 500%,
- a tensile strength of from 10.0 to 30.0 MPa, preferably from 10.5 to 27.5 MPa, still more preferably from 11.0 to 25.0 MPa, and/or
- a volume resistivity of from 0.1 to 10.0 x $10^{17}$ Ohmscm, preferably from 0.2 to 8.0 x $10^{17}$ Ohmscm, still more preferably from 0.3 to 7.0 x $10^{17}$ Ohmscm.

In another aspect relates furthermore to the use of the polyolefin composition in any of the above described embodiments for the production of an article, preferably at least one layer of a cable, more preferably the insulation layer of a low voltage cable.

The following examples serve to further illustrate the present invention. The invention is not limited to the examples.

**Examples**

**1. Measurement methods**

The following definitions of terms and determination methods apply for the above general description of the invention as well as to the below examples unless otherwise defined.

a) Melt Flow Rate

The melt flow rate (MFR) was determined according to ISO 1133 and is indicated in g/10 min. The MFR is an indication of the flowability, and hence the processability of the polymer. The higher the melt flow rate, the lower the viscosity of the polymer.

The $MFR_2$ of polyethylene (co-)polymers was measured at a temperature of 190°C and at a load of 2.16 kg.

b) Density

Density of the polymer was measured according to ISO 1183-1:2004 Method A on compression moulded specimen prepared according to EN ISO 1872-2 and is given in kg/m3.

c) Flexural modulus

Flexural modulus was determined according to ISO 178:2010. The test specimens were extruded tapes with a thickness of 2 mm. The length of the span between the supports was 64 mm, the test speed was 2 mm/min and the load cell was 100 N. The equipment used was an Alwetron TCT 10. The specimen were conditioned for minimum 16 hours at 23+/-2°C and 50% relative humidity prior testing.

d) Tensile modulus / Elongation at break / Tensile stress at break / Tensile strength

The tensile properties (tensile modulus, elongation at break, tensile stress at break and tensile strength) were measured in accordance with ISO 527-1: 2012 at 23°C and 50% relative humidity on a Zwick Z100-725333 tensile tester at a speed of 50 mm/min. The extensometer used was Zwick MultiXtens-236190 extensometer.
The test specimens were extruded tapes with a thickness of 1.8 mm prepared as described below for the hot set elongation test or cable samples as described below.

e) Hot set elongation test

Tape samples or cable samples as prepared below in the experimental part were used to determine the hot set properties. Three dumb-bells sample, taken out along extrusion direction were prepared according to ISO 527 5A from the 1.8 +/- 0.1 mm thick cross-linked tape. The hot set tests were made according to EN 60811-2-1 (hot set test) by measuring the thermal deformation.
Reference lines, were marked 20 mm apart on the dumb-bells. Each test sample was fixed vertically from upper end thereof in the oven and the load of 0.2 MPa are attached to the lower end of each test sample. After 15 min, 200°C in the oven the distance between the pre-marked lines were measured and the percentage hot set elongation calculated, elongation %. For permanent set %, the tensile force (weight) was removed from the test samples and after recovered in 200°C for 5 minutes and then let to cool in room temperature to room temperature. The permanent set % was calculated from the distance between the marked lines. The average of the three tests was reported.

f) Cross-linking

Prior to hot set test and tensile properties test, the 1.8 m thick tapes or cable samples were put into a water bath at 90°C for 24 hours or crosslinked 14 days at ambient conditions (23°C 50%RH).

g) Degree of expansion

The density of pellets is measured using a scale with density measurement, thereafter the density of a tape measured using the same technique. The expansion is the difference of density between pellets and tapes.

$$Expansion = \frac{d_{pl} - d_{pe}}{d_{pl}} \cdot 100$$

where

$d_p l$: density of the tapes in $kg/m^3$
$d_{pe}$: density of the pellet in $kg/m^3$.

h) Volume resistivity

Volume resistivity was measured according to IEC 60093 from cable samples as described below at 23°C and 50%RH

i) Median Particle Size ($d_{50}$)

Median particle size of the expandable microspheres can be measured by laser diffraction (ISO13320), dynamic light scattering (ISO22412) or sieve analysis (ASTMD1921-06). For the expandable microspheres used in the working examples, the determination of the median particle size $d_{50}$ was conducted by laser diffraction. Any limitation of the claims shall refer to values obtained from laser diffraction (ISO13320).

j) Gel Content

The gel-content of cross-linked samples was determined gravimetrically using a solvent extraction technique. The samples (~150 mg) were placed in pre-weighed 100 mesh stainless steel baskets and extracted in 1.1 dm3 by refluxing decalin for 6 h. An antioxidant, 10 g Irganox 1076 from Ciba-Geigy, was added to the solvent to prevent degradation. Then, the solvent was exchanged with 0.9 dm3 of additive free, preheated decalin and the extraction continued for 1 h. Finally, the samples were dried first at ambient overnight and then under vacuum for about 8 hours at 50°C. After this period the non-soluble fraction that remained in the basket reached a constant weight, which was used to calculate the gel-content.

**2. Materials**

a) Polyethylene with hydrolysable silane groups

Polyethylene 1 (PE1) is a silane group containing low density polyethylene having a density of 923 kg/m$^3$, a MFR$_2$ of 1 g/10 min and a vinyl trimethyl silane (VTMS) copolymer content of 0.072 mol kg/polymer (= 1.1 wt.-% based on the total weight of the copolymer produced according to the conditions disclosed for inventive example 2 (polymer D) according to EP 2 508 566 A1.

b) Silanol condensation catalyst (SCC) masterbatch

- a matrix resin: an ethylene butylacrylate copolymer with 17 wt% butylacrylate, a density of 924 kg/m$^3$ and a MFR$_2$ of 47.0 g/10 min;
- a silanol condensation catalyst: linear dodecylbenzene sulphonic acid (DDBSA);
- a silicon group containing compound: hexadecyl trimethoxy silane (HDTMS);
- antioxidant: butylated reaction products of 4-methyl-phenol with dicyclopentadiene (Ralox LC, CAS-no. 68610-51-5); and 1,3,5-tri-methyl-2,4,6-tris-(3,5-di-tert. butyl-4-hydroxyphenyl)benzene (Irganox 1330", CAS-no. 1709-702);
- carbon black 32 wt%.

Compounding of the master batches was performed using a Brabender kneader (small chamber, 47 cm$^3$) and 3 mm thick plates were compression moulded at 180 °C.

c) Expandable polymeric microspheres

The expandable polymeric microspheres (EPM) are Expancel 980 MB 120, which is a masterbatch of 65% expandable microspheres, carrier ethylene vinyl acetate, with a range of temperature expansion of 200-230°C during extrusion, commercially available from Nouryon Pulp and Performance.

d) Antioxidant

As antioxidant (AO) Irganox 1010 was used, commercially available from BASF SE.

**3. Examples**

In a first compounding step polyethylene PE1, the expandable polymeric microspheres and the antioxidant were compounded using a BUSS L602 kneader. The compounding temperature was maintained at a temperature of 140-145°C for preventing early foaming.

The compositions of the compounded compositions of the first compounding step are listed in Table 1.

Table 1: Compositions of CE1, IE1-IE7 after the first compounding step

|     | CE1  | IE1  | IE2  | IE3  | IE4  | IE5  | IE6  | IE7  |
|-----|------|------|------|------|------|------|------|------|
| PE1 | 99.9 | 99.4 | 99.1 | 98.9 | 98.7 | 99.7 | 99.6 | 99.5 |
| EPM | -    | 0.5  | 0.8  | 1.0  | 1.2  | 0.2  | 0.3  | 0.4  |
| AO  | 0.1  | 0.1  | 0.1  | 0.1  | 0.1  | 0.1  | 0.1  | 0.1  |

For a second compounding step the compounded compositions of the first compounding step as listed in Table 1 were first dry blended with the SCC masterbatch, each in a weight ratio of 95 wt% compounded composition and 5 wt% SCC masterbatch. The dry blends were then compounded.

The compounds of examples CE1 and IE5-IE7 were extruded as tapes at a temperature of 170-210°C for obtaining expanded test specimens. The tapes were crosslinked in a water bath at 90°C for 24 h or for 14 days at ambient conditions.

The compounds of examples CE1 and IE1-IE4 were extruded on a cable line as follows:

1.5 mm Cu conductor was preheated to 110°C. Cooling water was tempered to 50°C and positioned 60 cm from the die exit. Trial started with a die diameter of 2.8 mm and was changed to 2.3 mm to increase the melt pressure, which results in larger pressure drop at the die exit and might help to increase expansion degree. The extrusion speed was 75 m/min and the temperature profile 190/200/210/210/210/210/210/210 °C. Insulation thickness: 0.49 mm, expansion 15%. The cables were crosslinked at ambient temperature for 14 days.

The results of the evaluation of the expanded and crosslinked tapes of examples CE1 and IE5-IE7 are listed in Table 2.

Table 2: Evaluation of the tapes of examples CE1 and IE5-IE7

|  | CE1 | IE5 | IE6 | IE7 |
|---|---|---|---|---|
| EPM addition (wt%) | 0 | 0.2 | 0.3 | 0.4 |
| Expansion degree (%) | 0 | 1 | 3 | 5 |
| Tensile strength (MPa) (50mm/min) | 17 | 15 | 13 | 11 |
| Elongation at break (%) | 463 | 466 | 489 | 489 |
| Gel content (%) (hotsets, %) | 70 | 74 (95) | 39 (220) | 17 |
| Hot set elongation (200°C) (10N) | 60 | 95 | 220 | x |
| Flexural modulus (MPa) | 250 | 212 | 186 | 176 |
| Tensile modulus (MPa) | 179 | 169 | 160 | 157 |

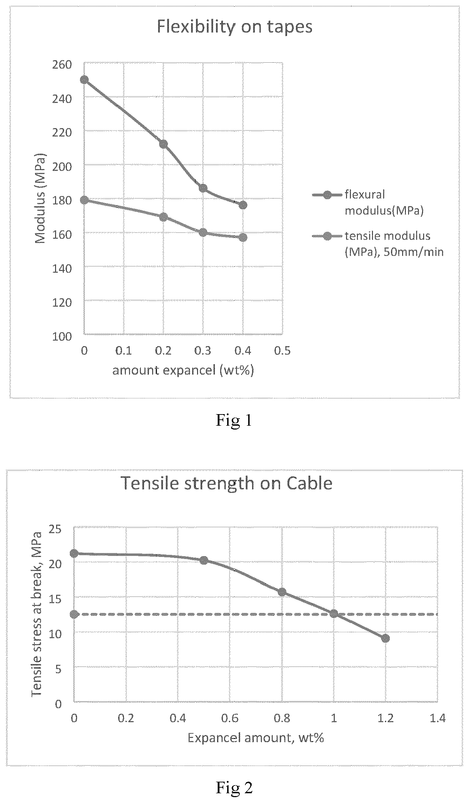

Figure 1 shows the flexibility of the tapes of CE1 and IE5-IE7 over the amount of expanded EPM as flexural modulus (upper curve) and the tensile modulus (lower curve) over amount of expanded EPM. It can be seen that the higher the amount of expanded EPM the higher is the flexibility of the tapes (lower flexural modulus and tensile modulus). This effect is more pronounced at lower EPM amounts so that for amounts higher than about 0.5 wt% EPM a saturation of the flexural modulus and tensile modulus curve can be expected.

The higher the amount of EPM the lower is the crosslinking degree (gel content) so that also in view of crosslinking behaviour lower amounts of EPM are beneficial when determined on tapes.

The results of the evaluation of the expanded and crosslinked cables of examples CE1 and IE1-IE4 are listed in Table 3.

Table 3: Evaluation of the cables of examples CE1 and IE1-IE4

|  | CE1 | IE1 | IE2 | IE3 | IE4 |
|---|---|---|---|---|---|
| EPM addition (wt%) | 0 | 0.5 | 0.8 | 1.0 | 1.2 |
| Expansion degree (%) | 0 | 2 | 4 | 7 | 24 |
| Tensile strength (MPa) (250mm/min) | 21.2 | 20.2 | 15.7 | 12.6 | 9.1 |
| Elongation at break (%) | 432.08 | 442.52 | 474.65 | 447.91 | 372.17 |
| VR 23°C (Ohmscm$\times 10^{17}$) | 1-5 | 1-5 | 1-5 | 1-5 | 0.5-5 |
| Tensile modulus (MPa) | 124 | 132 | 130 | 109 | 85 |

Figure 2 shows the tensile strength of the cables of CE1 and IE1-IE4 over the amount of expanded EPM. It can be seen that the higher the amount of expanded EPM the lower is the tensile strength of the cables. At amounts of expanded EPM of more than 1.0 wt% the tensile strength is lower than the requirements of cable standard HD603 f 12.5 MPa (dashed line).

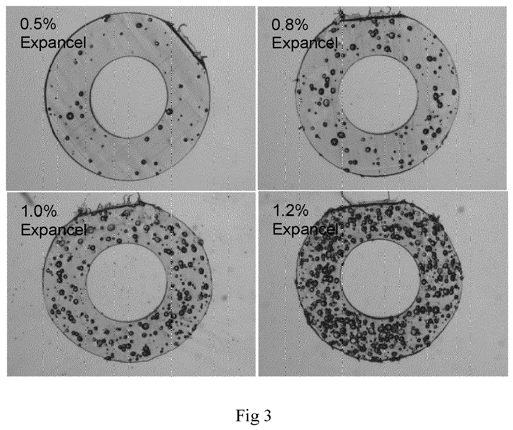

Figure 3 shows microscopic photos of 100 $\mu$m thick slices of the cables of IE1, IE2 IE3 and IE4. The expanded EPMs can be seen as black circles.

The properties of the cable of IE1 including 0.5 wt% expanded EPM as blowing agent were compared to comparative cables which include azodicarboxamide (ADCA) (CE2) or citric acid derivative (CE3) as foaming agent.

Foaming agents:

As ADCA foaming agent nCore 7155-M1-300 is used, which is a masterbatch of 15 wt% ADCA in LDPE, commercially available from Americhem.

As citric acid derivative foaming agent Tracel PO2217 is used which is an endothermic blowing agent masterbatch commercially available from Tramaco GmbH containing a derivate of citric acid and in which the amount of the derivate of citric acid is 100 wt % of the added blowing agents. The masterbatch further comprise a nucleating agent comprising a mineral nucleating agent.

The compositions of CE2 and CE3 are prepared as described above for the compositions of CE1 and IE1-IE7: For CE2 in a first compounding step PE1 is compounded with the ADCA foaming agent and antioxidant at a temperature below the starting temperature at which the foaming agent starts to expand. The compounded composition of CE2 was then dry blended with the SCC masterbatch, each in a weight ratio of 95 wt% compounded composition and 5 wt% SCC masterbatch.

For CE3 PE1, the citric acid derivative foaming agent, the antioxidant and the SCC masterbatch (5 wt% SCC) were dry blended.

The dry blends were then extruded in a cable line as follows:

1.5 mm Cu conductor was preheated to 110°C. Cooling water was tempered to 50°C and positioned 60 cm from the die exit. Trial started with a die diameter of 2.8 mm and was changed to 2.3 mm to increase the melt pressure, which results in larger pressure drop at the die exit and might help to increase expansion degree. The extrusion speed was 75 m/min and the temperature profile 190/200/210/210/210/210/210/210 °C. Insulation thickness: 0.49 mm. The cables were crosslinked at ambient temperature for 14 days.

The compositions and results of the evaluation of the expanded and crosslinked cables of examples IE1, CE2 and CE3 are listed in Table 4.

Table 4: Compositions and Evaluation of the cables of examples IE1, CE2 and CE3

|  | **IE1** | **CE2** | **CE3** |
|---|---|---|---|
| SCC masterbatch (wt%) | 5 | 5 | 5 |
| Type of foaming agent | EPM | ADCA | Citric acid derivative |
| Foaming agent (wt%) | 0.5 | 5 | 10 |
| Tensile strength (MPa) (250mm/min) | 20 | 15 |  |
| hot set elongation (200°C) (20N) | 106 | break | break |

It can be seen that CE2 and CE3 only show insufficient hot set elongation indicating an insufficient crosslinking.

The results of the experiments as listed above demonstrate that expandable polymeric microspheres are suitable for expanding polymer compositions comprising DDBSA silanol condensation catalysts without impairing the crosslinking activity of the silanol condensation catalyst. Industrial standards for LV applications can be fulfilled when foaming the polymer compositions to a certain degree, while improving the flexibility, the weight and reducing the polymer amounts needed.

**Claims**

1. A polymer composition comprising

   (A) a cross-linkable polyolefin comprising hydrolysable silane groups;
   (B) a silanol condensation catalyst; and
   (C) expandable polymeric microspheres.

2. The polymer composition according to claim 1, wherein the expandable polymeric microspheres (C) are present in the polymer composition in an amount of from 0.01 to 2.0 wt%, preferably 0.05 to 1.0 wt%, more preferably 0.1 to 0.7 wt%, based on the total amount of the polymer composition and/or the expandable polymeric microspheres (C) are added in form of a masterbatch comprising 30 to 80 wt% of the expandable polymeric microspheres in a carrier polymer.

3. The polymer composition according to claims 1 or 2, wherein the expandable polymeric microspheres (C) have a median average diameter $d_{50}$ of from 5 to 40 $\mu$m, preferably from 15 to 38 $\mu$m, determined by laser diffraction.

4. The polymer composition according to any one of the preceding claims, wherein the expandable polymeric microspheres (C) exhibit a start temperature at which the expandable polymeric microspheres begin to transition from unexpanded state to the expanded state in the range of from 100 to 200°C, preferably in the range of from 120 to 185°C, measured by expansion measurement.

5. The polymer composition according to any one of the preceding claims, wherein the silanol condensation catalyst (B) is an acidic silanol condensation catalyst,

   preferably the silanol condensation catalyst (B) comprises an organic sulfonic acid comprising 10 to 200 carbon atoms, the sulfonic acid further comprising at least one aromatic group,
   more preferably an organic sulfonic acid with the structural element (III)

   $$Ar(SO_3H)x \qquad (III)$$

   with

   Ar being an aryl groups, which may be substituted or non-substituted and
   x being at least 1,
   still more preferably in the structural element (III) Ar is substituted with at least one $C_1$ to $C_{30}$-hydrocarbyl group, still more preferably a $C_4$ to $C_{30}$ alkyl group.

6. The polymer composition according to any one of the preceding claims, wherein the silanol condensation catalyst (B) is present in an amount of from 0.0001 to 3.00 wt%, preferably 0.001 to 2.00 wt%, more preferably 0.005 to 1.00 wt%, based on the total weight amount of the polymer composition and/or component (A) comprises a polyethylene with hydrolysable silane groups.

7. The polymer composition according to any one of the preceding claims, wherein the cross-linkable polyolefin comprising hydrolysable silane groups (A) is present in the polymer composition in an amount of 80.0 to 99.5 wt%, more preferably of 85.0 to 99.0 wt.%, and even more preferably of 88.0 of 98.0 wt% of the total polymer composition and/or component (A) comprises hydrolysable silane groups in an amount of from 0.001 to 15.0 wt%, preferably from 0.01 to 5.0 wt%, more preferably from 0.1 to 2.5 wt% and most preferably from 0.4 to 1.5 wt%, based on the total weight of component (A).

8. The polymer composition according to any one of the preceding claims comprising 80.0 to 99.5 wt%, more preferably of 85.0 to 99.0 wt.%, and even more preferably of

   88.0 of 98.0 wt% of the cross-linkable polyolefin comprising hydrolysable silane groups (A),
   0.0001 to 3.00 wt%, preferably 0.001 to 2.00 wt%, more preferably 0.005 to 1.00 wt% of the silanol condensation catalyst (B), and
   0.01 to 2.0 wt%, preferably 0.05 to 1.0 wt%, more preferably 0.1 to 0.7 wt% of the expandable polymeric microspheres (C),
   all based on the total weight of the polymer composition.

9. The polymer composition according to any one of the preceding claims obtainable by compounding components (A), (B) and (C) at a temperature below a start temperature at which the expandable polymeric microspheres (C) begin to transition from unexpanded state to the expanded state.

10. An article comprising the polymer composition according to any one of the proceeding claims.

11. The article according to claim 10 being a cable, preferably a low voltage cable comprising at least one layer, preferably an insulation layer comprising the polymer composition according to any one of claims 1 to 9.

12. The article according to claims 10 or 11, wherein the polymeric microspheres are expanded and the polymer composition is crosslinked.

**13.** The article according to claim 12 having an expansion degree of from 0.1 to 20.0%, preferably 0.5 to 15.0%, still more preferably from 1.0 to 10.0%, determined by measuring the difference of density between non-expanded pellets and expanded tapes.

**14.** The article according to claims 12 or 13 having one or more preferably all of the following properties:

 • a flexural modulus of not more than 240 MPa, preferably from 125 to 230 MPa, still more preferably from 150 to 220 MPa, determined according to ISO 178:2010 on extruded tapes with a thickness of 2 mm;
 • a tensile modulus of not more than 180 MPa, preferably from 100 to 175 MPa, still more preferably from 105 to 170 MPa, determined according to ISO 527-1: 2012 on extruded tapes with a thickness of 1.8 mm;
 • an elongation at break of from 400% to 550%, preferably from 420% to 525%, still more preferably from 435% to 500%, determined according to ISO 527-1: 2012 on extruded tapes with a thickness of 1.8 mm;
 • a tensile strength of from 10.0 to 30.0 MPa, preferably from 10.5 to 27.5 MPa, still more preferably from 11.0 to 25.0 MPa, determined according to ISO 527-1: 2012 on extruded tapes with a thickness of 1.8 mm; and/or
 • a volume resistivity of from 0.1 to 10.0 x $10^{17}$ Ohmscm, preferably from 0.2 to 8.0 x $10^{17}$ Ohmscm, still more preferably from 0.3 to 7.0 x $10^{17}$ Ohmscm, determined according to IEC 60093.

**15.** The use of a polymer composition according to any one of claims 1 to 9 for the production of an article, preferably at least one layer of a cable, more preferably the insulation layer of a low voltage cable.

Fig 1

Fig 2

Fig 3

Europäisches
Patentamt

European
Patent Office

Office européen
des brevets

**EUROPEAN SEARCH REPORT**

Application Number

EP 21 21 6591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 845 584 A1 (LEE SOO JUNG [KR]) 7 July 2021 (2021-07-07) | 1,3,4,6, 7,10,12, 15 | INV. C08J9/00 C08J9/32 H01B3/30 |
| Y | * example 1 * | 1-15 | |
| Y | WO 2020/237416 A1 (DOW GLOBAL TECHNOLOGIES LLC [US]; HE CHAO [CN] ET AL.) 3 December 2020 (2020-12-03) * paragraphs [0001], [0090], [0093]; claim 1 * | 1-15 | |
| X | JP 3 608878 B2 (KANEGAFUCHI CHEMICAL IND) 12 January 2005 (2005-01-12) | 1,4,7,9, 10 | |
| Y | * paragraph [0034]; examples 5-7 * | 1-15 | |
| Y | US 2020/385542 A1 (SEO BEOM DOO [KR] ET AL) 10 December 2020 (2020-12-10) * example 1 * | 1-15 | |
| Y | US 2012/123016 A1 (BOLTE ANDREAS [DE] ET AL) 17 May 2012 (2012-05-17) * paragraph [0068] * | 1-15 | |
| Y,D | EP 2 508 566 A1 (BOREALIS AG [AT]) 10 October 2012 (2012-10-10) * examples 3,4 * | 5,6,14 | TECHNICAL FIELDS SEARCHED (IPC) B29C C08K C08G B28B C08J H01B |
| Y | EP 1 528 574 A1 (BOREALIS TECH OY [FI]) 4 May 2005 (2005-05-04) * paragraphs [0048] - [0049] * | 5,6 | |

The present search report has been drawn up for all claims

| Place of search | Date of completion of the search | Examiner |
|---|---|---|
| The Hague | 13 May 2022 | Jegou, Gwénaëlle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 6591

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | | | Publication date | Patent family member(s) | | Publication date |
|---|---|---|---|---|---|---|
| EP | 3845584 | A1 | 07-07-2021 | CN | 112839986 A | 25-05-2021 |
| | | | | EP | 3845584 A1 | 07-07-2021 |
| | | | | JP | 2022504913 A | 13-01-2022 |
| | | | | US | 2021340348 A1 | 04-11-2021 |
| | | | | WO | 2020076037 A1 | 16-04-2020 |
| WO | 2020237416 | A1 | 03-12-2020 | CA | 3140225 A1 | 03-12-2020 |
| | | | | CN | 113840878 A | 24-12-2021 |
| | | | | EP | 3976710 A1 | 06-04-2022 |
| | | | | KR | 20220013385 A | 04-02-2022 |
| | | | | WO | 2020237416 A1 | 03-12-2020 |
| JP | 3608878 | B2 | 12-01-2005 | JP | 3608878 B2 | 12-01-2005 |
| | | | | JP | H1072540 A | 17-03-1998 |
| US | 2020385542 | A1 | 10-12-2020 | CN | 111356730 A | 30-06-2020 |
| | | | | EP | 3705514 A1 | 09-09-2020 |
| | | | | JP | 6991643 B2 | 13-01-2022 |
| | | | | JP | 2021503031 A | 04-02-2021 |
| | | | | KR | 20190056799 A | 27-05-2019 |
| | | | | US | 2020385542 A1 | 10-12-2020 |
| | | | | WO | 2019098727 A1 | 23-05-2019 |
| US | 2012123016 | A1 | 17-05-2012 | CN | 102378774 A | 14-03-2012 |
| | | | | DE | 102009002230 A1 | 14-10-2010 |
| | | | | EP | 2417183 A1 | 15-02-2012 |
| | | | | ES | 2402803 T3 | 09-05-2013 |
| | | | | PL | 2417183 T3 | 28-06-2013 |
| | | | | US | 2012123016 A1 | 17-05-2012 |
| | | | | WO | 2010115715 A1 | 14-10-2010 |
| EP | 2508566 | A1 | 10-10-2012 | AU | 2012238586 A1 | 03-10-2013 |
| | | | | CA | 2832265 A1 | 11-10-2012 |
| | | | | CN | 103459491 A | 18-12-2013 |
| | | | | EA | 201391367 A1 | 30-04-2014 |
| | | | | EP | 2508566 A1 | 10-10-2012 |
| | | | | ES | 2475142 T3 | 10-07-2014 |
| | | | | KR | 20140021004 A | 19-02-2014 |
| | | | | PL | 2508566 T3 | 29-08-2014 |
| | | | | PT | 2508566 E | 09-07-2014 |
| | | | | US | 2014127505 A1 | 08-05-2014 |
| | | | | WO | 2012136773 A1 | 11-10-2012 |
| | | | | ZA | 201306880 B | 26-11-2014 |
| EP | 1528574 | A1 | 04-05-2005 | AT | 329356 T | 15-06-2006 |
| | | | | BR | PI0415578 A | 02-01-2007 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 21 21 6591

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | Publication date | Patent family member(s) | | Publication date |
|---|---|---|---|---|
| | | CA | 2541574 A1 | 06-05-2005 |
| | | CN | 1871668 A | 29-11-2006 |
| | | DE | 60305928 T2 | 12-10-2006 |
| | | EA | 200600824 A1 | 25-08-2006 |
| | | EP | 1528574 A1 | 04-05-2005 |
| | | ES | 2263891 T3 | 16-12-2006 |
| | | JP | 5117725 B2 | 16-01-2013 |
| | | JP | 2007509473 A | 12-04-2007 |
| | | KR | 20060100385 A | 20-09-2006 |
| | | PL | 206799 B1 | 30-09-2010 |
| | | PT | 1528574 E | 31-10-2006 |
| | | US | 2008093103 A1 | 24-04-2008 |
| | | WO | 2005041215 A1 | 06-05-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4413066 A
- US 4297310 A
- US 4351876 A
- US 4397981 A
- US 4446283 A
- US 4456704 A
- WO 9517463 A
- WO 2017102609 A
- WO 2020178381 A
- US 3646155 A
- US 4117195 A
- US 3615972 A
- EP 1254923 A
- WO 2005003199 A1
- EP 2508566 A1

**Non-patent literature cited in the description**

- **S. RIES et al.** Foam injection molding of thermoplastic elastomers: Blowing agents, foaming process and characterization of structural foams. *AIP Conference Proceedings 1593,* 2014, 401
- *CHEMICAL ABSTRACTS,* 68610-51-5
- *CHEMICAL ABSTRACTS,* 1709-702